# EUROPÄISCHE PATENTSCHRIFT

(11) **EP 0 651 313 B1**
(45) Veröffentlichungstag und Bekanntmachung des Hinweises auf die Patenterteilung: **12.04.2000**
(21) Anmeldenummer: 94115438.7
(22) Anmeldetag: 30.09.1994
(51) Int. Cl.: G06F 1/00, G06F 11/14, G06F 3/06

(54) **Verfahren zur Datensicherung und Datenrücksicherung**
Read/write data protection method
Méthode pour la protection de données en lisant et écrivant

(30) Priorität: 20.10.1993 DE 4335836
(43) Veröffentlichungstag der Anmeldung: 03.05.1995
(73) Patentinhaber: SEP Elektronik GmbH, D-83629 Weyarn (DE)
(72) Erfinder: Schlegel, Peter, Dipl.-Ing., D-83737 Irschenberg (DE)
(74) Vertreter: Patentanwälte Hauck, Graalfs, Wehnert, Döring, Siemons

(56) Entgegenhaltungen:
- WO-A-92/14204
- US-A- 4 675 807
- US-A- 5 133 065

## Beschreibung

Die Erfindung betrifft ein Verfahren zur Datensicherung bzw. zur Datenrücksicherung gemäß dem Oberbegriff der Patentansprüche 1 und 2.

Maßnahmen zur Datensicherung sind bekannt. Oftmals ist eine Datenverarbeitungsanlage mit mehreren Satellitenrechnern und den zugehörigen Dateien versehen, die über eine Netzwerkverbindung miteinander in Verbindung stehen. Die in den Dateien gespeicherten Daten werden gesichert, indem an das Netzwerk ein Datensicherungssystem angeschlossen wird, in dem die zu sichernden Daten auf Magnetband übertragen werden. Dies kann in bekannter Weise derart erfolgen, daß jedem Satellitenrechner des Gesamtsystems eine Einrichtung zur Datenbündelung zugeordnet ist, die auf ein Aufforderungskommando hin die zu sichernden Daten aus den Dateien bzw. Speichern mit Hilfe entsprechend gespeicherter Kommandos abruft und sammelt. Beim Sammeln werden die abgerufenen Daten zu einem sogenannten Datensicherungssatz zusammengesetzt. Ist ein solcher Datensicherungssatz fertiggestellt, so wird er zwischengespeichert. Anschließend wird der Übertragungskanal über eine Schnittstelle des Satellitenrechners zum Netzwerk und vom Netzwerk über eine weitere Schnittstelle zum Datensicherungssystem aufgebaut. Anschließend kann dann aus dem Zwischenspeicher der Einrichtung zur Datenbündelung der Datensicherungssatz über den Übertragungskanal auf eine Festplatte im Datensicherungssystem übertragen werden und anschließend werden die Daten aus diesem Plattenspeicher auf das Magnetband übernommen. Zur Datenrücksicherung erfolgt die Datenübertragung sinngemäß in umgekehrter Weise.

Das mehrmalige Zwischenspeichern, einmal am Quell- bzw. Satellitenrechner und zum anderen vor der Übertragung auf das Magnetband erfordert Zeit. Außerdem wird durch diese

Manipulation der Daten die Zuverlässigkeit der Datensicherung in Frage gestellt.

Aus der WO92/14204 ist eine Datensicherung gemäß dem Oberbegriff der Ansprüche 1 und 2 bekannt, bei der zur Beschleunigung die von mehreren Benutzem stammenden, zu sichernden Daten verschachtelt zum Magnetband übertragen werden. Dazu sind benutzerseitig Zwischenspeicher erforderlich.

Der Erfindung liegt deshalb die Aufgabe zugrunde, ein Verfahren zur Datensicherung bzw. zur Datenrücksicherung zu schaffen, das die Übertragung der zu sichernden Daten auf das Magnetband beschleunigt und die Zuverlässigkeit erhöht.

Erfindungsgemäß ist die genannte Aufgabe durch die Merkmale des Patentanspruchs 1 bzw. des Patentanspruchs 2 gelöst.

Erfindungsgemäß wird schon nach Beginn des Datensammelns in der Einrichtung zur Datenbündelung des jeweiligen Satellitenrechners der Übertragungskanal zum Datensicherungssystem und zum Magnetband aufgebaut und mit der Übertragung der zu sichernden Daten begonnen. Es wird also nicht gewartet, bis der Datensicherungssatz vollständig ist. Außerdem entfällt die Zwischenspeicherung. Die Übertragung des Datenstroms erfolgt kontinuierlich. Dies gilt auch für das Datensicherungssystem, bei dem die Zwischenspeicherung, beispielsweise mit Festplatte entfällt. Vielmehr wird der Übertragungskanal zum Magnetband unmittelbar hergestellt, so daß der Datenstrom kontinuierlich ohne Zwischenspeicherung auf das Magnetband übertragen wird.

Erfindungsgemäß wird damit die Zeit für die Datensicherung verkürzt und die Zuverlässigkeit erhöht, weil Zwischenspeicher entfallen. Der zu sichernde Datenstrom wird nicht manipuliert.

Die Rückübertragung von Datensicherungssätzen aus dem Magnetband zurück zur jeweiligen Datei erfolgt in umgekehrter Weise sinngemäß. Nach dem Suchen des Datensicherungssatzes auf dem Magnetband wird der Übertragungskanal zu der betreffenden Datei über das Netzwerk hergestellt und erfolgt dann unmittelbar durch die Übertragung des kontinuierlichen Datenstroms zur Einrichtung für die Datenbündelung, die in diesem Fall das Verteilen der Daten auf die Dateien übernimmt.

Weiterbildungen der Erfindung sind in den Unteransprüchen gekennzeichnet.

Dabei handelt es sich insbesondere um eine Koordination zwischen der Einrichtung zum Bündeln der Daten bzw. zum Verteilen der Daten und der Datenübertragung. So ist zwischen dieser Einrichtung und der Schnittstelle für den Anschluß des Satellitenrechners an das Netzwerk eine sogenannte Pipeline geschaltet, von der der Datenstrom gesteuert wird. Solange der Datenübertragungskanal noch nicht aufgebaut ist oder die Datenübertragung unterbrochen werden muß, weil das Netzwerk für andere Aufgaben gebraucht wird, unterbricht die Pipeline den Datenstrom und das weitere Sammeln und Bündeln von Daten. Solange also über die Schnittstelle als Sender keine Daten auf das Netzwerk übertragen werden können, wird der Betrieb der Einrichtung zur Datenbündelung unterbrochen. In diesem Fall wird im Datensicherungssystem automatisch das Magnetbandlaufwerk stillgesetzt. Dies ist ohne weiteres möglich, da bekannte, moderne Magnetlaufwerke soviel Intelligenz haben, daß sie bei einem leeren Datenpuffer warten und bei einem vollen Datenpuffer zu laufen beginnen. Diese Funktion ist ein Standard für alle typischen Magnetbandlaufwerke. Sobald am Ausgang der Pipeline wieder Daten abgenommen und gesendet werden, wird auch die Bündelungseinrichtung wieder aktiviert und die Übertragung des Datenstroms fortgesetzt. Das Magnetbandlaufwerk beginnt dann wieder zu laufen, da neue, zu speichernde Daten vorliegen. Das Magnetbandlaufwerk verhält sich dementsprechend, wenn während der Datenrücksicherung eine Unterbrechung erfolgt.

Ein Ausführungsbeispiel der Erfindung ist nachstehend anhand der Zeichnung erläutert. Es zeigen:
- Fig. 1: eine schematische Darstellung des Funktionsablaufs der Datensicherung und
- Fig. 2: eine schematische Darstellung des Funktionsablaufs der Datenrücksicherung.

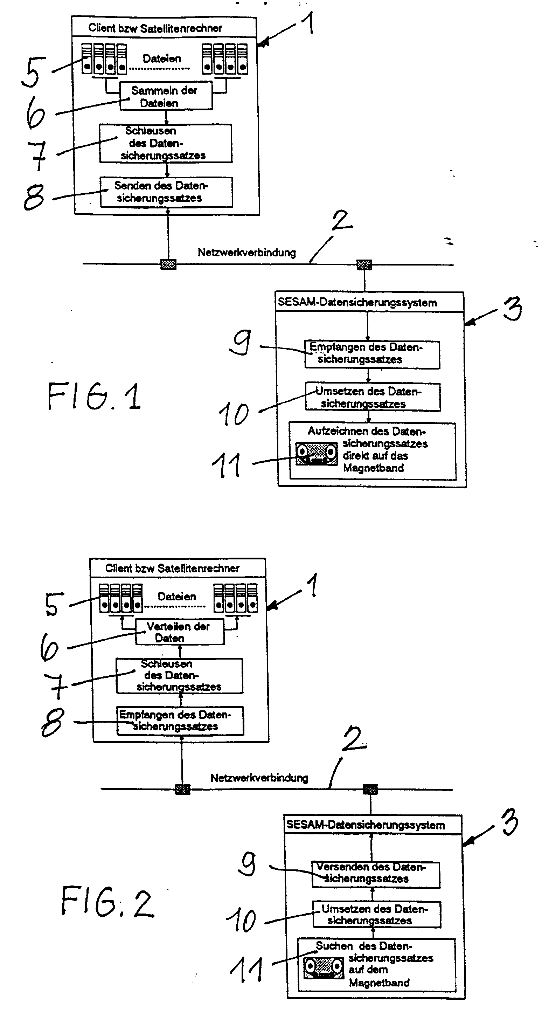

In Fig. 1 sind mehrere Satellitenrechner 1, von denen nur einer dargestellt ist, an eine Netzwerkverbindung 2 angeschlossen. Für alle Satellitenrechner 1 ist gemeinsam ein Datensicherungssystem 3 vorgesehen, das ebenfalls an das Netzwerk 2 angeschlossen ist.

Es sei angenommen, daß jeder Satellitenrechner 1 mehrere Dateien 5 aufweist, deren Daten zu sichern sind. Jeder Satellitenrechner 1 ist mit einer Einrichtung 6 zum Bündeln und Sammeln der Daten und mit einer Schnittstellung 8 zum Anschluß an das Netzwerk 2 versehen. Zwischen der Einrichtung 6 zum Bündeln der Daten und der Schnittstelle 8 liegt eine Verbindungseinrichtung 7, bzw. eine Pipeline 7 mit zeitlicher Kontrolle zum Schleusen des Datensicherungssatzes von der Einrichtung 6 in die Schnittstelle 8, von der die Daten zum Netzwerk gesendet werden.

Das Datensicherungssystem 3 ist über eine Schnittstelle 9 an das Netzwerk 2 angeschlossen. Auf einem Magnetbandgerät 11 werden die zu sichernden Daten aufgezeichnet. Zwischen der Schnittstelle 9 und dem Magnetbandgerät 11 ist eine Einrichtung 10 zum Umsetzen des Datenstroms geschaltet. Diese Einrichtung 10 macht das Bandlaufwerk empfangsbereit, nimmt von der Netzschnittstelle 9 den Datenstrom auf und führt ihn auf das Magnetband 11.

Die Betriebsweise ist folgende: Zur Datensicherung werden von der Einrichtung 6 im jeweiligen Satellitenrechner 1 auf Anforderung hin die zu sichernden Daten aus den Dateien 5 gesammelt und zu einem Paket, nämlich dem Datensicherungssatz, gebündelt, welches am Ausgang der Einrichtung 6 abgegeben wird. In der Einrichtung 7 (Pipeline) erfolgt die kontrollierte Übergabe der Eingangsdaten an die Netzschnittstelle 8. Die Eingangsdaten werden zum Ausgang durchgeschleust, solange sie dort abgenommen werden. Falls dies nicht möglich ist, so wird der Datenstrom am Eingang angehalten und das weitere Sammeln und Bündeln der Daten unterbrochen. Sobald der Ausgang an der Netzschnittstelle wieder frei ist, wird das Durchschleusen des Datenstroms wieder aufgenommen. Sobald also ein Datensicherungsvorgang begonnen werden soll, wird der Übertragungskanal von dem jeweiligen Satellitenrechner über das Netzwerk 2 in das Datensicherungssystem 3 aufgebaut und erfolgt anschließend sofort die Übertragung in einem kontinuierlichen Datenstrom.

Über die Schnittstelle 9 im Datensicherungssystem 3 erhält das Magnetband 11 den Datenstrom über die Einrichtung 10 zum Umsetzen des Datensicherungssatzes.

Der umgekehrte Funktionsablauf zur Datenrücksicherung ist in Fig. 2 dargestellt. Die Einrichtungen sind mit den gleichen Bezugszeichen wie in Fig. 1 versehen. Sobald eine Datenrücksicherung erfolgen soll, wird der betreffende Datensicherungssatz, der zu dem jeweiligen Satellitenrechner übertragen werden soll, auf dem Magnetband 11 gesucht und direkt vom Magnetband über die Einrichtung 10 zur Schnittstelle 9 übertragen. Der Übertragungskanal wird von dem jeweiligen Satellitenrechner 1 her aufgebaut, sobald das Magnetband 11 auslesebereit ist. Anschließend wird der Datenstrom über die Schnittstelle 8 im Satellitenrechner 1 und die Pipeline 7 zur Einrichtung 6 übertragen, die nunmehr das Verteilen der Daten auf die jeweiligen Dateien 1 übernimmt. Die Einrichtung 7 ist in beiden Richtungen betreibbar. Für die Datenrücksicherung werden die Eingangsdaten von der Schnittstelle 8 zum Ausgang, nämlich der Verteilungseinrichtung 6, durchgeschleust, solange sie dort abgenommen werden.

## Patentansprüche

1. Verfahren zur Datensicherung auf Magnetband, bei dem zu sichernden Daten aus mindestens einer Datei oder einem Speicher abgerufen und als Datensicherungssatz in einer Einrichtung zur Datenbündelung gesammelt werden, eine Netzwerksverbindung zu einem System zur Datensicherung auf Magnetband aufgebaut wird, der Datensicherungssatz über die Netzwerksverbindung gesendet und auf dem Magnetband aufgezeichnet wird, dadurch gekennzeichnet, daß zu Beginn des Datensammelns die Netzwerksverbindung zwischen der Einrichtung (6) zur Datenbündelung und dem Datensicherungssystem (3) sowie im Datensicherungssystem zum Magnetbandgerät (11) aufgebaut und der Datensicherungssatz ohne Zwischenspeicherung in einem fortlaufenden Datenstrom gesendet und unmittelbar auf das Magnetband aufgezeichnet wird.

2. Verfahren zur Datenrücksicherung, bei dem die auf einem Magnetband gespeicherten Daten gesucht und ausgelesen werden, eine Netzwerksverbindung zwischen dem Datensicherungssystem zumindestens einer Datei oder einem Speicher aufgebaut wird, und die Daten über die Netzwerksverbindung zu einer Einrichtung zum Verteilen der Daten gesendet und von dieser Einrichtung in mindestens eine Datei oder einen Speicher eingelesen werden, dadurch gekennzeichnet, daß zu Beginn des Auslesens der Daten aus dem Magnetband (11) die Netzwerksverbindung zwischen dem Datensicherungssystem und der Einrichtung (6) zum Verteilen der Daten aufgebaut wird und der Datensicherungssatz ohne Zwischenspeicherung in einem fortlaufenden Datenstrom gesendet und unmittelbar über die Einrichtung (6) in die Datei bzw. den Speicher übertragen wird.

3. Verfahren nach Anspruch 1 oder 2, bei dem jeweils ein die Speicher mit den zu sichernden Daten aufweisender Rechner (1) über eine Schnittstelle (8) und das Datensicherungssystem (3) über eine Schnittstelle (9) an die Netzwerksverbindung (2) angeschlossen ist, dadurch gekennzeichnet, daß die Übertragung des kontinuierlichen Datenstroms zwischen der Einrichtung (6) zum Sammeln bzw. Verteilen der Daten und der Schnittstelle (8) im Rechner (1) über eine Pipeline (7) erfolgt, von der das Sammeln bzw. Verteilen der Daten unterbrochen wird, wenn vom jeweiligen Ausgang der Pipeline keine Daten abgenommen werden.

## Claims

1. A method for data backup by using a magnetic tape, including reading data to be backed up from at least a data file or a memory, collecting the data as a data save set in a data pack-up device, setting up a network interconnection to a data backup system using the magnetic tape, transmitting the data save set through the network interconnection and recording the data save set on the magnetic tape, characterized in that the network interconnection between the data pack-up device (6) and the data backup system (3) as well as to the magnetic tape (11) in the data backup system is set up with start of data collection; that the data save set is transmitted in a continuous data stream without being temporarily stored; and that the continuous data stream is directly recorded on the magnetic tape.

2. A method for data restoring, including searching and reading data stored on a magnetic tape, setting up a network interconnection between the data backup system and at least a data file or a memory, and transmitting the data via the network interconnection to a data distributing device, and the data distributing device reading the data into at least a data file or a memory, characterized in that the network interconnection between the data backup system and the data distributing device is set up with start of reading out the data from the magnetic tape; that the data save set is transmitted in a continuous data stream without being temporarily stored; and that the data stream is directly transmitted through the data distributing means into the data file or the memory.

3. The method of claim 1 or 2, wherein a computer (1) comprising a memory for storing the data to be backed up is connected through an interface (8) to the network interconnection (2) and the data backup system (3) is connected through an interface (9) to the network interconnection (2), characterized by transmitting the continuous data stream between the data collecting device (6) or the data distributing device (6), respectively, and the interface (8) of the computer (1) via a pipeline (7) and interrupting the collecting or distributing step when no data are transmitted from the respective output of the pipeline.

## Revendications

1. Procédé de sauvegarde des données sur bande magnétique, au cours duquel des données à sauvegarder sont appelées à partir d'au moins un fichier de données ou d'une mémoire et sont rassemblées dans un dispositif de multiplexage de données, une liaison de structure de réseau est créée vers un système de sauvegarde de données sur bande magnétique et le groupement de données à sauvegarder est émis au moyen de la liaison de structure de réseau et est enregistré sur bande magnétique,
caractérisé en ce qu'au début du regroupement des données, la liaison de structure de réseau est créée entre le dispositif (6) de multiplexage des données et le système (3) de sauvegarde des données, ainsi que dans le système de sauvegarde des données vers l'appareil (11) à bande magnétique, et en ce que le groupement de données à sauvegarder est émis, sans mise en mémoire intermédiaire, dans un courant continu de données et est directement enregistré sur la bande magnétique.

2. Procédé de sauvegarde des données, au cours duquel les données enregistrées sur une bande magnétique sont repérées et extraites, une liaison de structure de réseau est créée entre le système de sauvegarde de données d'au moins un fichier de données ou d'une mémoire et les données sont envoyées, par la liaison de structure de réseau, à un dispositif de répartition des données, et sont enregistrées dans au moins un fichier de données ou dans au moins une mémoire,
caractérisé en ce qu'au début de l'extraction des données de la bande magnétique (11), la liaison de la structure de réseau est créée entre le système de sauvegarde des données et le dispositif (6) de répartition des données et en ce que le groupement de données à sauvegarder est envoyé, sans mise en mémoire intermédiaire, dans un courant continu de données et est transmis directement, par le dispositif (6), dans le fichier de données ou la mémoire.

3. Procédé suivant la revendication 1 ou la revendication 2, au cours duquel, chaque fois, un calculateur (1) présentant la mémoire avec les données à sauvegarder est raccordé au moyen d'une interface (8) et le système (3) de sauvegarde des données est raccordé au moyen d'une interface (9) à la liaison (2) de structure de réseau,
caractérisé en ce que la transmission du courant continu de données entre le dispositif (6) de regroupement ou de répartition des données et l'interface (8) dans le calculateur (1) se fait par l'intermédiaire d'un pipeline (7), par lequel le regroupement ou la répartition des données est interrompu si aucune donnée n'est prélevée sur la sortie concernée du pipeline.
